(19) Europäisches Patentamt
European Patent Office
Office européen des brevets

(11) EP 0 593 899 B1

(12) EUROPÄISCHE PATENTSCHRIFT

(45) Veröffentlichungstag und Bekanntmachung des Hinweises auf die Patenterteilung:
**16.04.1997 Patentblatt 1997/16**

(51) Int. Cl.[6]: **B23D 57/00**, B28D 1/08

(21) Anmeldenummer: **93114729.2**

(22) Anmeldetag: **14.09.1993**

# (54) Sägeseildrehvorrichtung

Saw wire rotating device

Dispositif pour mettre en rotation un fil de sciage

(84) Benannte Vertragsstaaten:
**AT BE CH DE DK ES FR GB IT LI NL PT SE**

(30) Priorität: **21.10.1992 AT 2080/92**

(43) Veröffentlichungstag der Anmeldung:
**27.04.1994 Patentblatt 1994/17**

(73) Patentinhaber: **Tyrolit Schleifmittelwerke Swarovski KG**
**A-6130 Schwaz (AT)**

(72) Erfinder:
- **Thaler, Sigmund**
**A-6250 Breitenbach (AT)**
- **Plattner, Josef**
**A-6200 Jenbach (AT)**

(56) Entgegenhaltungen:
**FR-A- 778 280**
**FR-A- 2 655 904**
**US-A- 3 682 030**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 593 899 B1

Printed by Rank Xerox (UK) Business Services
2.14.2/3.4

## Beschreibung

Die Erfindung bezieht sich auf eine Vorrichtung an Seilsägemaschinen zur Erzeugung einer ständigen und gleichmäßigen Drehbewegung des Sägeseils während des Schnittes. gemäß Oberbegriff von Patentanspruch 1; siehe z.B. FR-A 2 655 904.

Das Sägeseil besteht aus einem aus mehreren Metalldrähten geflochtenen Seil mit daran befestigten Schneidperlen, die Hochleistungsschneidstoff wie Diamant und / oder kubisches Bornitrid in einer vorzugsweise metallischen Bindung enthalten. Beim Einsatz in stationären oder mobilen Seilsägemaschinen werden die Seilenden des Sägeseils mit einem Verschluß zu einer geschlossenen Scheilschleife verbunden.

Das Schneiden mit Drahtseilen ist ein althergebrachtes Verfahren zur Steinbearbeitung. Dabei wurde dem Spülwasser ein Schleifmittel zugemengt, welches die eigentliche Zerspanungsarbeit leistete.

Ein bedeutender Schritt in der Entwicklungsgeschichte der Seilsägetechnik ist die Einführung von diamantbesetzten Seilen wie die US-PS 4735 188 und die EP 0090 274 B1 zeigen, wobei die Diamantpartikeln zunächst auf der Mantelfläche von Hülsen galvanisch eingenickelt und diese "Perlen" anschließend auf ein Drahtseil aufgefädelt werden. Zwischen den einzelnen Perlen befinden sich dabei Federn als Abstandshalter, ca. hinter jeder 5. Perle gibt es einen Klemmring, welcher mit dem Drahtseil verpreßt wird und damit das Verschieben der Perlen auf dem Seil unterbindet. Bei dieser Variante eines Diamantsägeseiles können sich die Perlen frei drehen und deshalb kann der einschichtige Diamantbelag auch gut ausgenützt werden. Derartige Seile eignen sich jedoch nur für die Bearbeitung von weichen Materialien wie z.B. Marmor.

Für erschwerte Bearbeitungsbedingungen wie z.B. Granit oder Beton wurde zunächst der gleiche Grundaufbau verwendet, statt der einschichtigen galvanischen Beläge wurden nun jedoch mehrschichtig gesinterte Beläge verwendet.

Sehr rasch stellte man jedoch fest, daß der beim Schneiden anfallende abrasive Schneidschlamm, welcher ungehindert an das Stahlseil herantreten kann, bei diesem Aufbau zu einer vorzeitigen Zerstörung des Stahlseiles führt. Es kommt daher beim praktischen Einsatz derartiger Seile sehr häufig zu Seilbrüchen, was die Wirtschaftlichkeit der Diamantseilsägetechnik bis dato erheblich einschränkte.

Dieser Mangel führte zur nächsten Generation von Diamantsägeseilen mit den mit Kunststoff oder Gummi befestigten Seilperlen, wobei das Befestigungsmaterial auch gleichzeitig eine Schutzfunktion für das Trägerseil übernimmt entsprechend EP 0160 625 A2, EP 0306 952 A1, EP 0317 965 A2, US-PS-3 884 212 und IT Pat-Nr. 573635. An so gefertigten Sägeseilen können sich die einzelnen Perlen jedoch nicht mehr drehen, was besonders bei nachfolgend genannten Bedingungen zu einem unrunden Verschleiß der Diamantperlen und damit zu einer schlechten Wirtschaftlichkeit führt:

- bei besonders kurzen Seilsägen (unter 5 m)
- bei stationären Blocksäge- und Formschnittmaschinen (Seil wird nie verdreht)
- bei extrem kurzen Kontaktlängen zwischen Seilsäge und Werkstück
- bei Endlosseilen (keine Möglichkeit zum Verdrehen)
- bei hoher Seilvorspannung
- bei hohen Stahlarmierungsanteilen im Werkstück (Bau)

Für alle Seile, welche mit Seilverschlüssen ausgestattet sind, sind Handhabungsdetails bekannt, um die gleichmäßige Abnützung der Schneidperlen anzustreben. Dabei wird das regelmäßige Öffnen und Schließen des Seilverschlusses und damit das Stillsetzen der Sägeanlage erforderlich. Im Anlagenstillstand muß das Sägeseil händisch eingedreht, wieder geschlossen und neu durch Maschine und Werkstück geführt werden. Eine solche diskontinuierliche Arbeitsweise ist teuer und nicht in allen Anwendungsfällen anwendbar bzw. wird die Anwendungsgrenze des Seilsägeverfahrens unnötig eingeschränkt.

Zur generellen Lösung dieses Problems wurde die erfindungsgemäße Sägeseildrehvorrichtung entwickelt, welches das Seil während des Sägeprozesses zu einer zwangsläufigen Seildrehbewegung veranlaßt, welche eine kreisrunde und konzentrische Perlenabnützung sicherstellt.

Der Gegenstand der Erfindung ist die beschriebene Seildrehvorrichtung. Sie erzeugt die beschriebene zwangsläufige Drehbewegung des Sägeseils bei allen Seilsägeanwendungen sicher und zuverlässig.

Gemäß der Erfindung ist bei einer eingangs genannten Vorrichtung wenigstens eine stufenlos profilierte Seildrehrolle mit wenigstens einem Seileinlaufbereich und einem im Durchmesser unterschiedlichen Seilauslaufbereich vorgesehen.

Nachfolgend wird die Erfindung unter Bezugnahme auf die beigefügten Zeichnungen weiter erläutert:

Fig. 1 zeigt ein Ausführungsbeispiel einer Sägeseildrehvorrichtung, bei der das Sägeseil von einem separaten Antriebsaggregat angetrieben wird;
Die Seildrehrolle (1) ist unmittelbar vor dem Eintritt in den Werkstoff angeordnet, wobei eine bereits durchgeführte Drehung einzelner Perlen an einem Sägeseil (2) beim Eintritt in das zu bearbeitende Material über die Reibung fixiert wird. Die Seildrehrolle (1) besitzt eine Gummi- oder Kunststoffauflage, und es ist eine Führungsrolle (3) vorgesehen, deren Anordnung gemäß der Seildrehrolle (1) in Fig. 3 näher gezeigt ist.

Fig. 2 zeigt eine schematische Darstellung im Bereich einer als Seilantrieb wirkenden Seildrehrolle. Bei dem Ausführungsbeispiel gemäß Fig. 2 beträgt der Umschlingungswinkel ρ 180°, und die Führungsrolle (3') ist normal zu Seildrehrolle (1') angeordnet.

Fig. 3 zeigt eine schematische Darstellung von Seildrehrolle (1) und Führungsrolle (3) zur Erläuterung des Umschlingungswinkel (ρ), des Rollenabstands (e) und des Einlaufwinkels (γ). Bei der Darstellung gemäß Fig. 3 beträgt der Umschlingungswinkel ρ des Sägeseils (2) um die Seildrehrolle (1) 106°, der Rollenabstand e zwischen Seildrehrolle (1) und Führungsrolle 3 ist 1,3xD und der Einlaufwinkel γ 4,5°. (D) ist, wie aus Fig. 4 ersichtlich, der wirksame Durchmesser von Seilmitte zu Seilmitte zwischen Einlauf- und Auslaufseite, bezogen auf die Drehachse der Seildrehrolle (1). In Fig. 3 ist der kurvenförmige Verlauf des Sägeseils (2) während des seitlichen Abrollens zwischen Seileinlauf- und Seilauslaufbereich der Seildrehrolle (1) gut sichtbar.

Fig. 4 zeigt schematisch einen Schnitt durch eine Seildrehrolle (1) zur Erläuterung der Sägeseilanlageverhältnisse mit Einlaufseite unten und Auslaufseite oben, wobei ein Umschlingungswinkel ρ = 180° und ein Konuswinkel β von 25° vorgesehen sind. Angedeutet ist der Versatz q und eine Strecke s, um die das Sägeseil (2) mit dem Durchmesser d den Konus hinunterrollt.

In Fig. 5 sind Ausführungsbeispiele für Seildrehrollenprofile schematisch gezeigt, wobei die Profile A und D für eine Laufrichtung und die Profile B, C, E und F für beide Laufrichtungen bevorzugt werden.

Fig. 6 zeigt eine graphische Darstellung der Ergebnisse des Vergleichsversuchs bezüglich der Abnahme des maximalen Schneidperlendurchmessers mit steigender Schnittfläche.

Fig. 7 zeigt eine graphische Darstellung der Ergebnisse des Vergleichsversuchs bezüglich der Zeitspanfläche.

Fig. 8 zeigt eine graphische Darstellung der Ergebnisse des Vergleichsversuchs bezüglich der maximalen Rundheitsabweichung der Schneidperlen.

Fig. 9 zeigt eine graphische Darstellung der Ergebnisse des Vergleichsversuchs bezüglich der maximalen Konizität der Schneidperlen.

Das Grundprinzip der Seildrehvorrichtung basiert auf einer vorzugsweise konisch geformten Rolle (1) mit Gummi- oder Kunststoffauflage. Wird nun ein Sägeseil (2) auf dem größeren Durchmesser des konischen Rollenprofils zugeführt, wird es im weiteren Verlauf auf der Rolle (1) versuchen, bedingt durch die Zugkraft im Sägeseil, auf den kleineren Durchmesser der Rolle um den Betrag (s) in Fig. 4 abzuwandern. Da die Reibung zwischen den Diamantperlen und der Auflage auf der Rolle sehr groß ist, wird das Seil dabei veranlaßt, diese Abwanderung in Form von Rollbewegungen und nicht durch Abrutschen zurückzulegen. Damit ist die Drehbewegung generiert und muß über den elastischen Verdrehwiderstand des Seiles an den übrigen Teil des Seiles weitergegeben werden. Diese Drehbewegung wird wirkungsvoll weitergegeben, wenn das Seil bereits vor dem Einsatz mit ca. 2 Umdrehungen pro Laufmeter Seil voreingedreht wurde.

Eine optimale Position für die Anordnung der Seildrehrolle (1) ist unmittelbar vor dem Eintritt in den Werkstoff entsprechend Fig. 1, denn eine bereits durchgeführte Drehung der einzelnen Perlen wird beim Eintritt in das Material über die Reibung fixiert, eine elastische Rückdrehung ist damit unterbunden. Grundsätzlich kann jedoch auch das Antriebsrad (1') gemäß Fig. 2 als Seildrehrolle ausgebildet werden, was vor allem bei kurzen Seillängen vorteilhaft ist.

Der Umschlingungswinkel ρ gemäß Fig. 3 kann ausgehend von sehr geringen Winkeln von ca. 30° bis zum Sonderfall von 360° entsprechend einer vollen Umschlingung betragen. Beim Sonderfall der vollen Umschlingung muß durch konstruktive Maßnahmen verhindert werden, daß einander die auf der Seildrehrolle ein- und auslaufenden Seilteile nicht berühren. Bei Berührung der beiden Seilteile ist mit hohem Verschleiß zu rechnen, weil die Relativgeschwindigkeit am Berührungspunkt aufgrund der häufig verwendeten Schnittgeschwindigkeit von 21 (m/s) etwa 3 (m/s) beträgt, wie im Rechenbeispiel in der Tabelle 1 für die praktischen Einsatzdaten ermittelt wurde.

Der Konuswinkel β in Fig. 4 beeinflußt nur die Kraftkomponente $F_r$, mit der das Seil zur Rollbewegung gezwungen wird, nicht jedoch die Drehfrequenz des Seiles um seine Achse. Die Seildrehrolle funktionierte sicher in den Versuchsserien ab β = 10° bei einem Umschlingungswinkel von ρ = 360°, die besten Ergebnisse wurden bei β = 25° und einem Umschlingungswinkel von ρ = 90° bis 180° erzielt.

In Anlehnung an das Konusprofil sind erfindungsgemäß abgewandelte Rollenprofile denkbar, wie beispielhaft in der Fig. 5 angeführt. Das erfindungsgemäße Grundprinzip des Abrollens des Seiles im Laufe des im Umschlingungswinkel ρ zurückgelegten Weges bleibt von der Ausführungsform des Seillaufprofils weitgehend unbeeinflußt. Es muß jedoch grundsätzlich zwischen ein- und zweiseitig wirkenden Profilen unterschieden werden. Bei einseitigen Profilen wie A und D in Fig. 5 kann eine Laufrichtungsänderung zum Blockieren des Seiles führen. Bei Maschinen mit Laufrichtungsänderung und 360° Umschlingungswinkel ρ an der Seildrehrolle 1 wird das Seillaufprofil vorzugsweise symmetrisch ausgeführt.

Die Distanz q zwischen Seileinlauf und Seilauslauf auf der Seildrehrolle bestimmt im wesentlichen die Drehfrequenz des Seiles entsprechend der Berechnung der Drehwirkung im anschließenden Rechenbeispiel. Wie die Versuche zeigten, genügt bereits eine eingestellte Distanz q von 2-4 mm für einen sicheren Seildreheffekt. Wesentlich höhere q-Werte erzeugten schädliche Schwingungen im Seil, sollten also vermieden werden.

**Berechnungsbeispiel**

Das Seil mit dem Ø d wird beim Umlauf um die Seildrehrolle (1)(1') um eine Distanz q versetzt und muß daher die Strecke s den Konus hinunterrollen.

$$s = q / \cos \beta$$

Während einer Drehung der Seildrehrolle (1)(1') mit dem Durchmesser D um den Umschlingungswinkel ρ dreht sich dabei eine Perle, unabhängig von D um den Winkel

$$\alpha = 360 \times s / (d \times \pi) = s / d \times 360 / \pi$$

oder anders ausgedrückt um $n = \alpha / 360$ Umdrehungen.

Die Länge des auf dem Konus (4) befindlichen Sägeseiles (2) wird durch den Durchmesser D der Seildrehrolle (1) und den Umschlingungswinkel ρ bestimmt.

$$l = D \times \pi \times \rho / 360$$

Da das Sägeseil (2) sich dabei wie oben beschrieben n mal dreht, ergibt dies pro Laufmeter Seil eine Verdrehung des Seiles von:

$$\zeta = n/l$$

Auf die gesamte Seillänge L gesehen, ergibt dies eine Anzahl von Eindrehungen

$$N = \zeta \times L$$

Da das Seil mit der Geschwindigketi $V_s$ bewegt wird, werden pro Zeiteinheit m Drehungen durchlaufen.

$$m = V_s \times \zeta$$

Aus der Drehzahl m ergibt sich die Drehgeschwindigkeit des Perlenumfanges nach folgender Formel:

$$V_d = m \times d \times \pi / 1000$$

Bei Zugrundelegung von Standardparametern wird für verschiedene Seilversatzwerte q die Drehwirkung berechnet und in Tabelle 1 dargestellt:

## Tabelle 1

| D = 200 mm<br>d = 11 mm | | $v_s$ = 21 m/s | Umschlingungswinkel ρ = 90° | | Länge L = 12,0 m | Konuswinkel β = 25° |
|---|---|---|---|---|---|---|
| Versatz zwischen Seilein u. Auslauf | Durch die SDR bewirkte Drehwirkung einer Perle in ° pro Abrollvorgang. | Anzahl der durch die SDR bewirkten Drehungen einer Perle pro Abrollvorgang. | Anzahl der durch die SDR bewirkten Drehungen pro Meter Seillänge. | Anzahl der durch die SDR bewirkten Drehungen pro Sekunde. | Anzahl der durch die SDR bewirkten Drehungen pro kompletten Seildurchlauf. | Drehgeschwindigkeit des Perlenumfangs in m/s. |
| q (mm) | α (°) | n (1) | ξ (1 / m) | m (1 / s) | N (1) | $v_d$ (m/s) |
| 1 | 11 | 0,03 | 0,20 | 4,27 | 2,44 | 0,15 |
| 2 | 23 | 0,06 | 0,41 | 8,54 | 4,88 | 0,30 |
| 3 | 34 | 0,10 | 0,61 | 12,81 | 7,32 | 0,44 |
| 4 | 46 | 0,13 | 0,81 | 17,07 | 9,76 | 0,59 |
| 5 | 57 | 0,16 | 1,02 | 21,34 | 12,20 | 0,74 |
| 6 | 69 | 0,19 | 1,22 | 25,61 | 14,64 | 0,89 |
| 7 | 80 | 0,22 | 1,42 | 29,88 | 17,07 | 1,03 |
| 8 | 92 | 0,26 | 1,63 | 34,15 | 19,51 | 1,18 |
| 9 | 103 | 0,29 | 1,83 | 38,42 | 21,95 | 1,33 |
| 10 | 115 | 0,32 | 2,03 | 42,69 | 24,39 | 1,48 |
| 11 | 126 | 0,35 | 2,24 | 46,95 | 26,83 | 1,62 |

Der Seileinlauf kann durch Vorschalten einer Führungsrolle (3) in beliebiger Entfernung (e) vorzugsweise ca. 1 bis 2 mal dem Durchmesser der Seildrehrolle (1) erfolgen. Die Achse dieser Führungsrolle (3) kann dabei in einem Einlaufwinkel (γ) zur Seildrehrolle (1) stehen, um einen schonenden Seillauf zu ermöglichen. Vorteilhaft verwendet man eine handelsübliche selbsteinstellende Schwenkrolle.

Bei durchgeführten Schneidversuchen nach Ausführungsbeispiel gemäß Fig. 1 und Fig. 3 wurde ab Konuswinkel β = 5 ° die erfindungsgemäße fortlaufende Drehung des Sägeseils erreicht. Bei Konuswinkeln ab etwa 45° ist Schlupf zwischen Seil und Rolle aufgetreten, was im Dauerbetrieb zu vorzeitigem Verschleiß des Rollenbelages führen könnte.

Die Anordnung nach Fig. 1 und Fig. 3 stellt eine mögliche Ausführungsform der Erfindung der Seildrehvorrichtung dar. Es sind jedoch Ergänzungen mit zusätzlichen Führungsrollen im Seileinlauf und Seilauslauf etwa zur Dämpfung von Seilschwingungen bei langen Seillängen denkbar, ohne daß dieselben die erfindungsgemäße Wirkung der eigentlichen Seildrehvorrichtung beeinflussen. Desgleichen hat eine umgekehrte Anordnung von Seildrehrolle (1) und Führungsrolle (3) bezüglich der Seilschnittrichtung keine einschränkende Wirkung auf das Ziel der Erfindung, da bei umgekehrter Seilschnittrichtung lediglich die Verdrehrichtung des Seiles um seine Achse sich ebenfalls umkehrt, und sonst keinerlei Wirkung auf die erfindungsgemäße ständige Drehung feststellbar war.

Der nachfolgend beschriebene Seilsägeversuch zeigte, daß die erfindungsgemäße stetige Drehbewegung des Seiles, erzeugt durch die speziell geformte Seildrehrolle nach einem der Beispiele (A) - (F) in Fug. 5, einen gleichmäßigen Verschleiß der Perlen sicherstellt (Rundheitsabweichung ≤ 0,2 mm). Mit der Rollenanordnung nach Fig. 1 und Fig. 3 wurde ein sehr konstantes Schneidverhalten ohne Seilschwingungen sowie eine gute Regelbarkeit des Seilsägevorganges erreicht. Mit der nach Fig. 1, 3 und 4 angebrachten Seildrehrolle konnte eine Erhöhung der Zerspanungsleistung um durchschnittlich 6 % erzielt werden. Die graphische Zusammenfassung der Versuchsergebnisse finden sich in den Fig. 6-9. Es wurde ein handelsübliches Diamantseil verwendet.

**Liste der verwendeten Bezugszeichen**

1 Seildrehrolle

1' Seildrehrolle als Antriebsrolle der Seilsägemaschine

2 Sägeseil

3 Führungsrolle

| | |
|---|---|
| 3' | Führungsrolle bei Seildrehrolle als Antriebsrolle |
| 4 | Rollenprofil der Seildrehrolle |
| β | Konuswinkel |
| ρ | Umschlingungswinkel |
| q | seitlicher Abstand zwischen Seileinlauf und Seilauslauf |
| γ | Einlaufwinkel |
| s | Abrollbetrag |

**Patentansprüche**

1. Vorrichtung zum Drehen eines Sägeseils (2), insbesondere eines Sägeseils mit Schneidperlen, welche mit Hochleistungsabrasivstoffen wie Diamant und / oder kubischem Bornitrid durchsetzt und mit vorzugsweise metallischem Bindemittel gebunden sind, **gekennzeichnet durch** wenigstens eine stufenlose profilierte Seildrehrolle (1, 1') mit wenigstens einem Seileinlaufbereich und einem im Durchmesser unterschiedlichen Seilauslaufbereich.

2. Vorrichtung nach Anspruch 1, dadurch gekennzeichnet, daß die Seildrehrolle (1, 1') einen konischen Profilverlauf zwischen Seileinlaufbereich und Seilauslaufbereich aufweist.

3. Vorrichtung nach Anspruch 2, dadurch gekennzeichnet, daß das konische Profil einen Konuswinkel (β) von 5 bis 45°, vorzugsweise 10 bis 30°, aufweist.

4. Vorrichtung nach einem der vorangehenden Ansprüche, dadurch gekennzeichnet, daß an der Seildrehrolle (1, 1') ein Sägeseil-Umschlingungswinkel (ρ) von 30 bis 360°, vorzugsweise von 60 bis 180° vorgesehen ist.

5. Vorrichtung nach einem der vorangehenden Ansprüche, dadurch gekennzeichnet, daß der Seildrehrolle (1, 1') für die Einstellung eines seitlichen Abstandes (q) zwischen Seileinlaufbereich und Seilauslaufbereich eine Führungsrolle (3, 3') zugeordnet ist.

6. Vorrichtung nach Anpruch 5, dadurch gekennzeichnet, daß der Abstand (q) durch die Führungsrolle (3, 3') bis zu 30 %, vorzugsweise zwischen 1 bis 10 %, des Durchmessers der Seildrehrolle (1, 1') einstellbar ist.

7. Vorrichtung nach einem der vorangehenden Ansprüche, dadurch gekennzeichnet, daß die Seildrehrolle als Antriebsrolle (1') einer Seilsägemaschine ausgebildet ist.

8. Vorrichtung nach einem der vorangehenden Ansprüche, dadurch gekennzeichnet, daß die Drehachse der Führungsrolle (3, 3') und die Drehachse der Seildrehrolle (1, 1') winkelig zueinander angeordnet sind.

9. Vorrichtung nach einem der vorangehenden Ansprüche, dadurch gekennzeichnet, daß die Führungsrolle (3, 3') frei schwenkbar gelagert ist.

10. Vorrichtung nach einem der vorangehenden Ansprüche, dadurch gekennzeichnet, daß für größere Sägeseillängen zusätzliche Führungsrollen (3, 3') vor und hinter der Seildrehrolle (1, 1') vorgesehen sind.

**Claims**

1. Device for twisting a cutting wire (2), especially a cutting wire with cutting beads wherein said beads are impregnated with superabrasives, such as diamond and/or cubic boron nitride, and preferably bonded by means of a metallic bond, and said device being characterized by at least one continuously profiled wire twisting pulley (1, 1') with at least one wire entry section and a wire exit section different from the entry section in its diameter.

2. Device according to claim 1 with the wire twisting pulley (1, 1') having a conical profile between wire entry section and wire exit section.

3. Device according to claim 2 with the conical profile having a conical angle (β) of 5 to 45°, preferably 10 to 30°.

4. Device according to one of the claims above with a cutting wire wrapping angle (ρ) at the wire twisting pulley (1, 1') being 30 to 360°, preferably of 60 to 180°.

5. Device according to one of the claims above with a guide pulley (3, 3') for the adjustment of a lateral distance (q) between wire entry and wire exit section being added to the wire twisting pulley (1, 1') .

6. Device according to claim 5, with the distance (q) being adjustable by means of the guide pulley (3, 3') by up to 30 %, preferably between 1 and 10 %, of the diameter of the wire twisting pulley (1,1').

7. Device according to one of the claims above with the wire twisting pulley being designed as a drive pulley (1') of a wire sawing machine.

8. Device according to one of the claims above with the rotation axis of the guide pulley (3, 3') and the rotation axis of the wire twisting pulley (1, 1') being arranged in an angle to each other.

9. Device according to one of the claims above with the guide pulley (3, 3') having a bearing that allows said guide pulley to swivel freely.

10. Device according to one of the claims above with additional guide pulleys (3, 3') in front of and behind the wire twisting pulley (1, 1') for larger sawing wire lengths.

**Revendications**

1. Dispositif de rotation d'un câble de sciage (2), en particulier d'un câble de sciage doté d'une couche de coupe dont les éléments contiennent des abrasifs performants comme le diamant et/ou le nitrure de bore cubique, et liés de préférence par un liant métallique, caractérisé par la présence d'au moins une poulie de rotation (1,1'), profilée et sans gradations, avec au moins un secteur d'entrée du câble et un secteur de sortie du câble, de diamètre différent.

2. Dispositif selon revendication 1, caractérisé par le fait que la poulie de rotation du câble (1,1') présente un profit conique entre le secteur d'entrée du câble et le secteur de sortie du câble.

3. Dispositif selon revendication 2, caractérisé par le fait que le profit conique présente un angle de cône (β) de 5 à 45°, et de préférence de 10 à 30°.

4. Dispositif selon l'une des revendications précédentes, caractérisé par le fait qu'à la hauteur de la poulie de rotation du câble (1,1') on prévoit un angle d'enroulement (ρ) de 30 à 360°, et de préférence de 60 à 180°.

5. Dispositif selon l'une des revendications précédentes, caractérisé par le fait que pour la mise au point d'un intervalle latéral (q) entre le secteur d'entrée du câble et le secteur de sortie du câble on a adjoint un rouleau de guidage (3,3') à la poulie de rotation du câble (1,1').

6. Dispositif selon revendication 5, caractérisé par le fait que grâce au rouleau de guidage (3,3') l'intervalle (q) est ajustable jusqu'à 30%, et de préférence entre 1 et 10% du diamètre de la poulie de rotation du câble (1,1').

7. Dispositif selon l'une des revendications précédentes, caractérisé par le fait que la poulie de rotation du câble a l'aspect du rouleau moteur (1') d'une scie machine à câble.

8. Dispositif selon l'une des revendications précédentes, caractérisé par le fait que l'axe de rotation du rouleau de guidage (3,3') et l'axe de rotation de la poulie de rotation du câble (1,1') forment un angle l'un par rapport à l'autre.

9. Dispositif selon l'une des revendications précédentes, caractérisé par le fait que le rouleau de guidage (3,3') est placé en pivotement libre.

10. Dispositif selon l'une des revendications précédentes, caractérisé par le fait que pour des longueurs supérieures de câbles de sciage, on a prévu des rouleaux de guidage (3,3') supplémentaires devant et derrière la poulie de rotation du câble (1,1').

Fig. 1

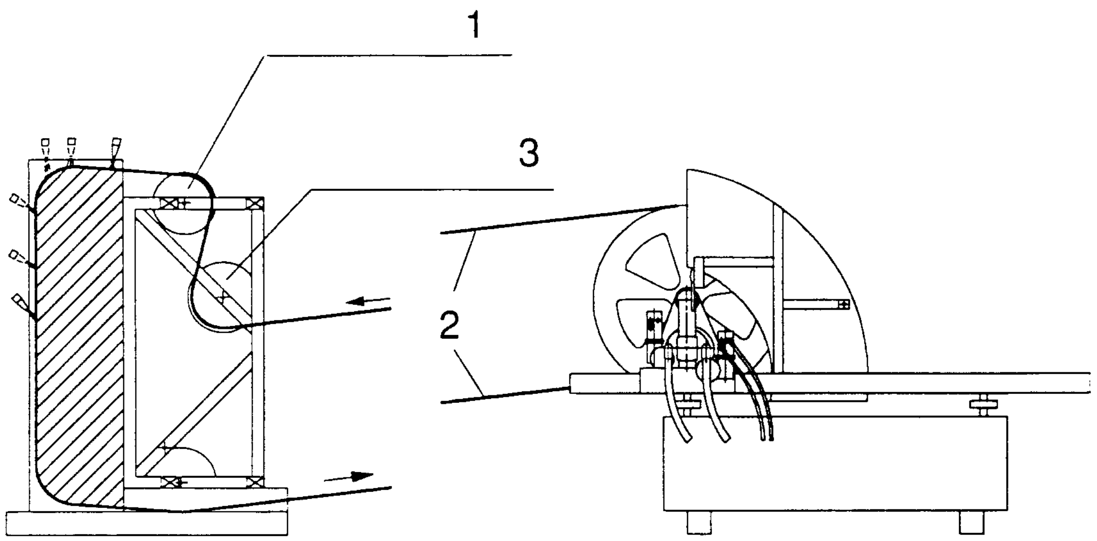


Fig. 2

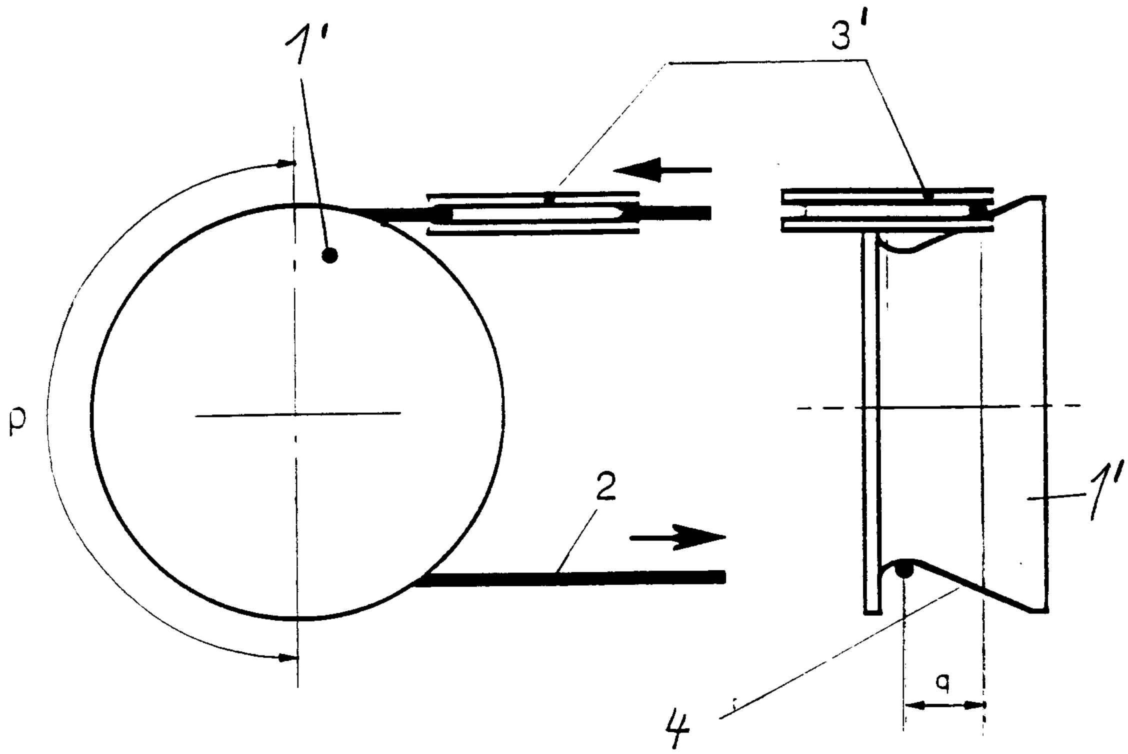

Fig. 3

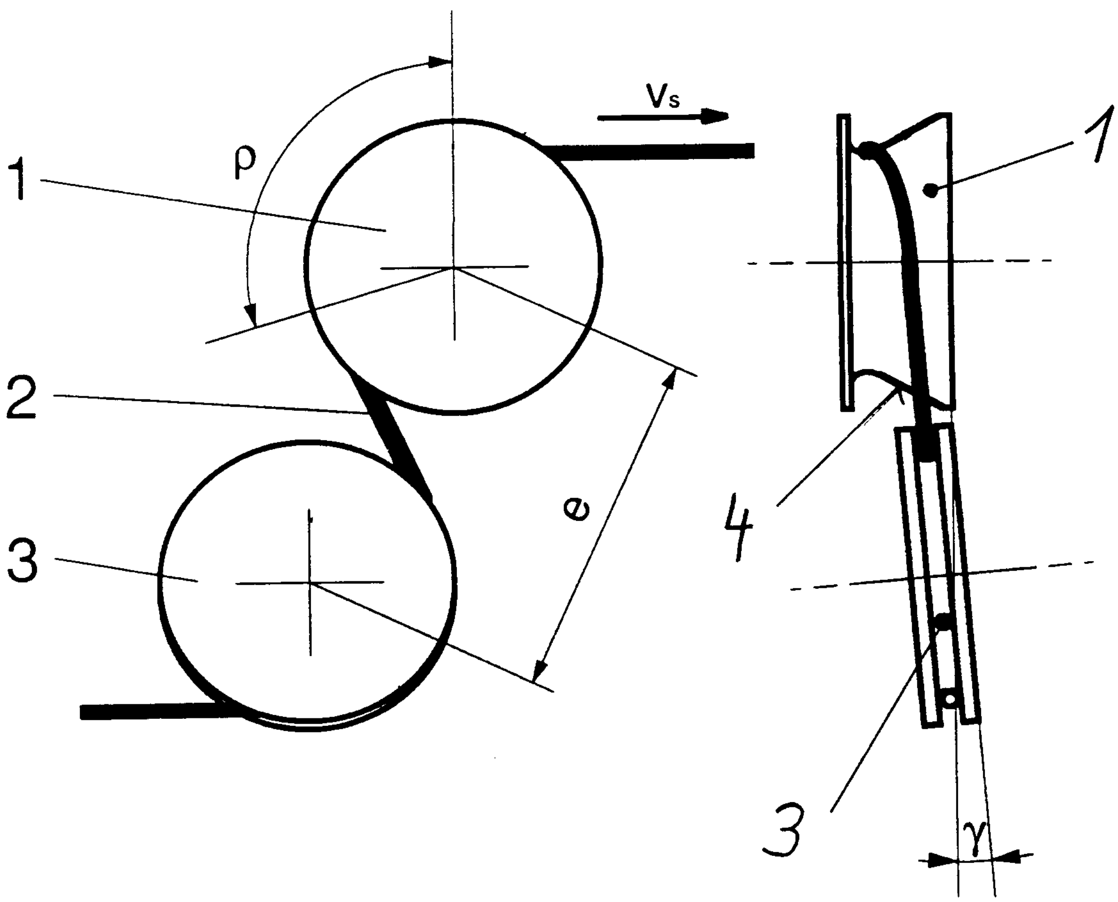

Fig. 4

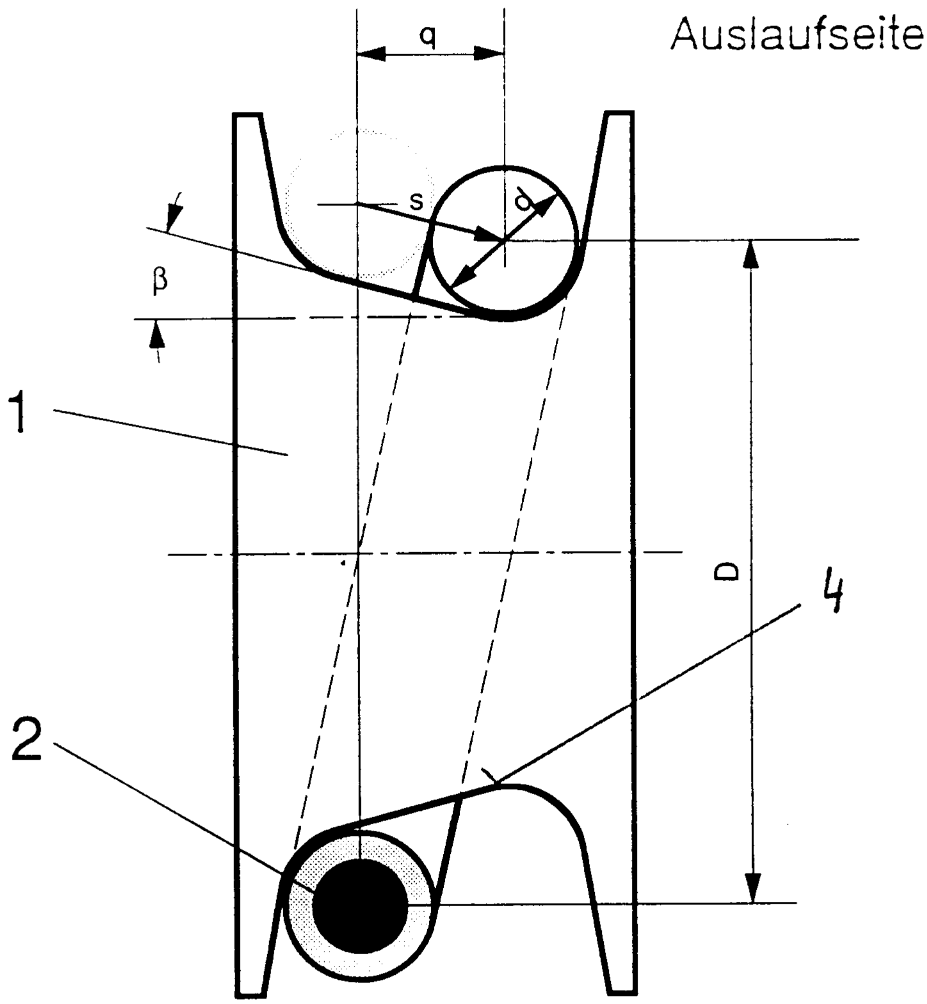


Einlaufseite

Fig. 5

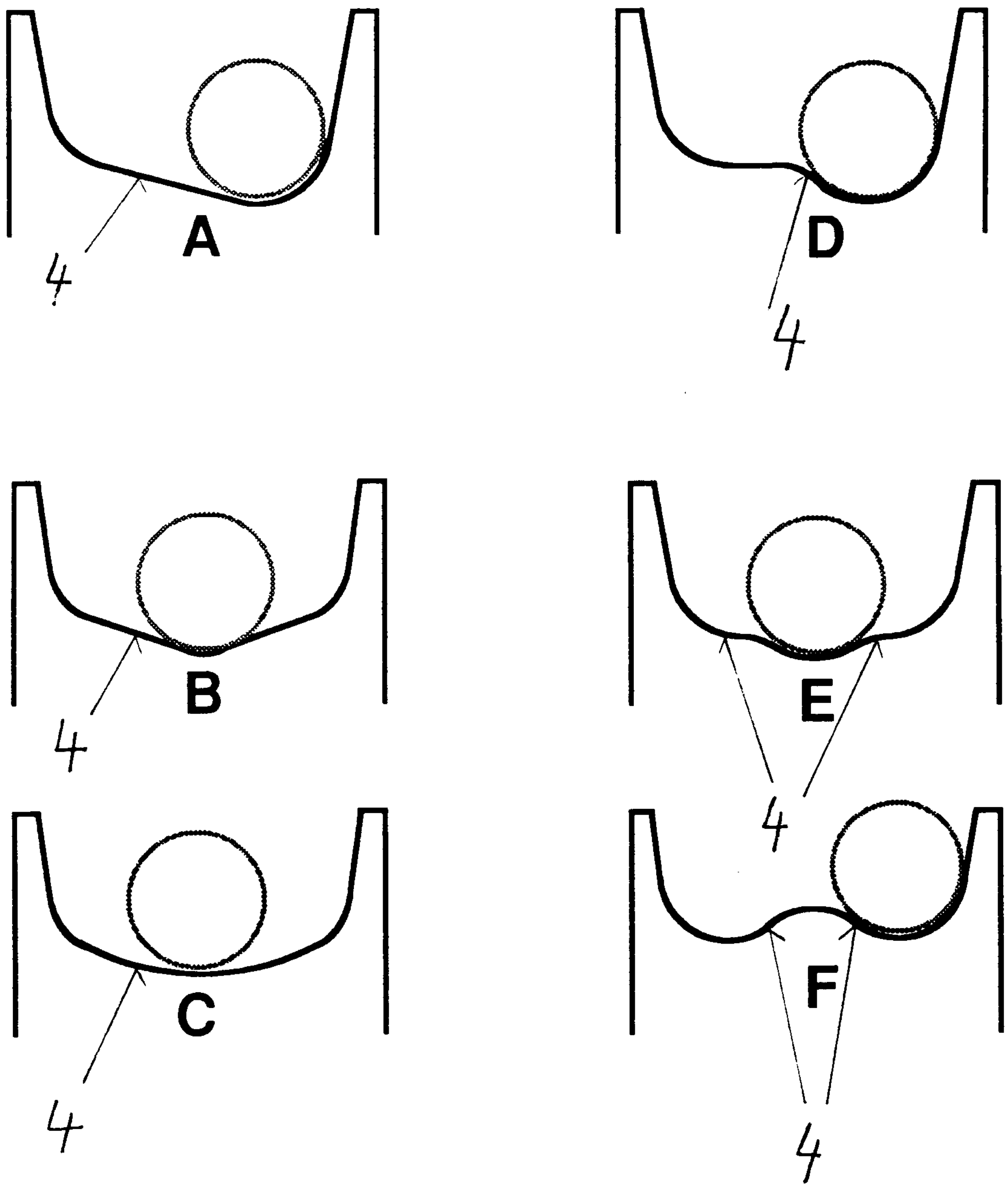

Fig. 6

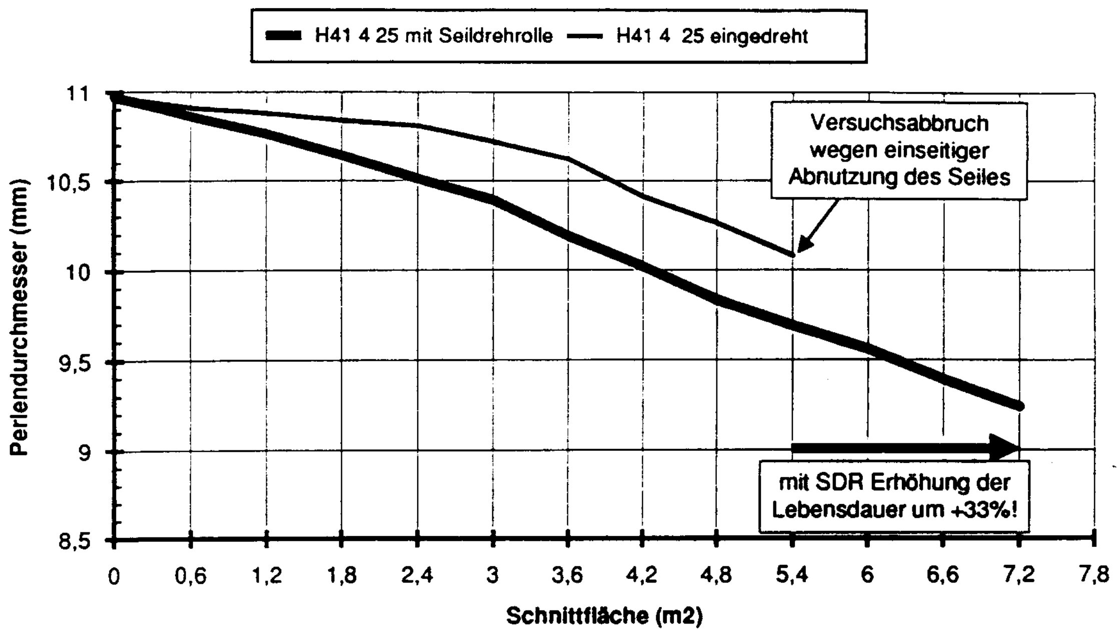
H41 4 25 mit Seildrehrolle
H41 4 25 eingedreht
Perlendurchmesser (mm)
11
10,5
10
9,5
9
8,5
Versuchsabbruch wegen einseitiger Abnutzung des Seiles
mit SDR Erhöhung der Lebensdauer um +33%!
0
0,6
1,2
1,8
2,4
3
3,6
4,2
4,8
5,4
6
6,6
7,2
7,8
Schnittfläche (m2)

Fig.7

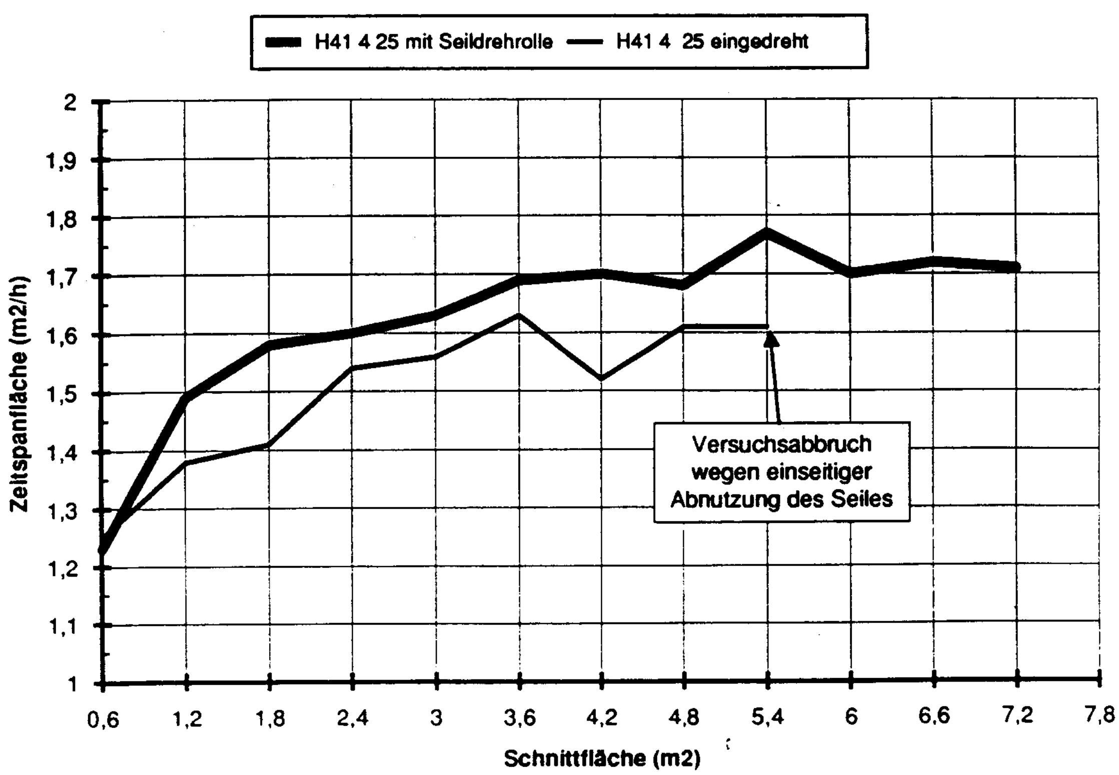
H41 4 25 mit Seildrehrolle
H41 4 25 eingedreht
Zeitspanfläche (m2/h)
2
1,9
1,8
1,7
1,6
1,5
1,4
1,3
1,2
1,1
1
Versuchsabbruch wegen einseitiger Abnutzung des Seiles
0,6
1,2
1,8
2,4
3
3,6
4,2
4,8
5,4
6
6,6
7,2
7,8
Schnittfläche (m2)

Fig. 8

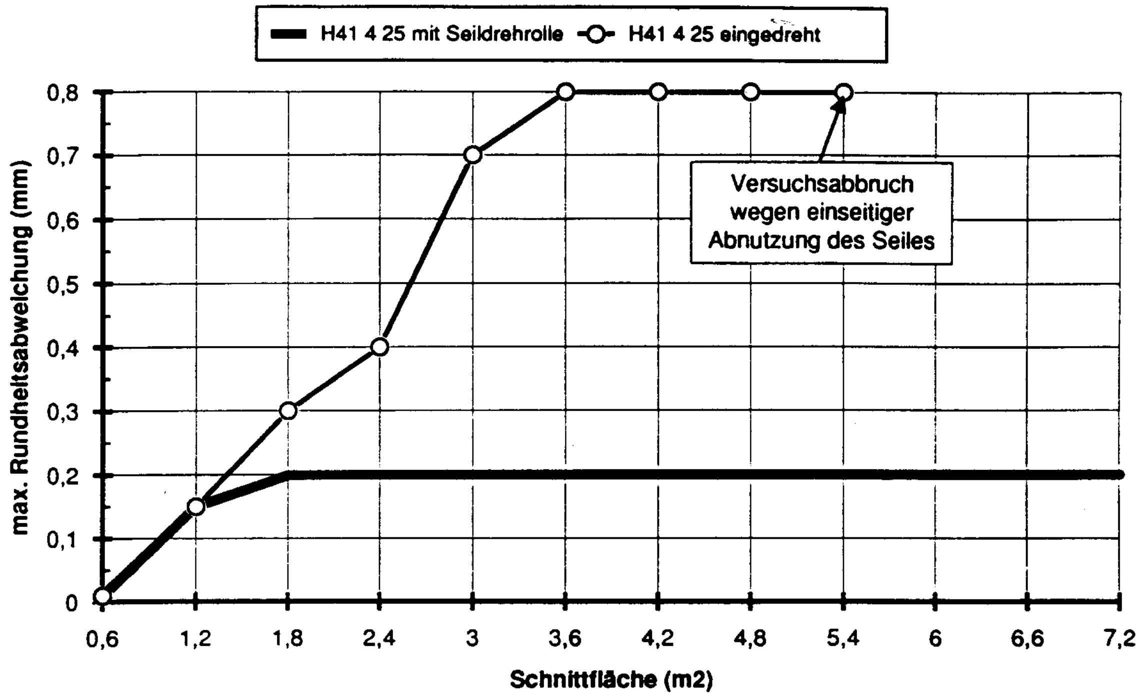
H41 4 25 mit Seildrehrolle
H41 4 25 eingedreht
Versuchsabbruch wegen einseitiger Abnutzung des Seiles
max. Rundheitsabweichung (mm)
0,8
0,7
0,6
0,5
0,4
0,3
0,2
0,1
0
0,6
1,2
1,8
2,4
3
3,6
4,2
4,8
5,4
6
6,6
7,2
Schnittfläche (m2)

Fig. 9

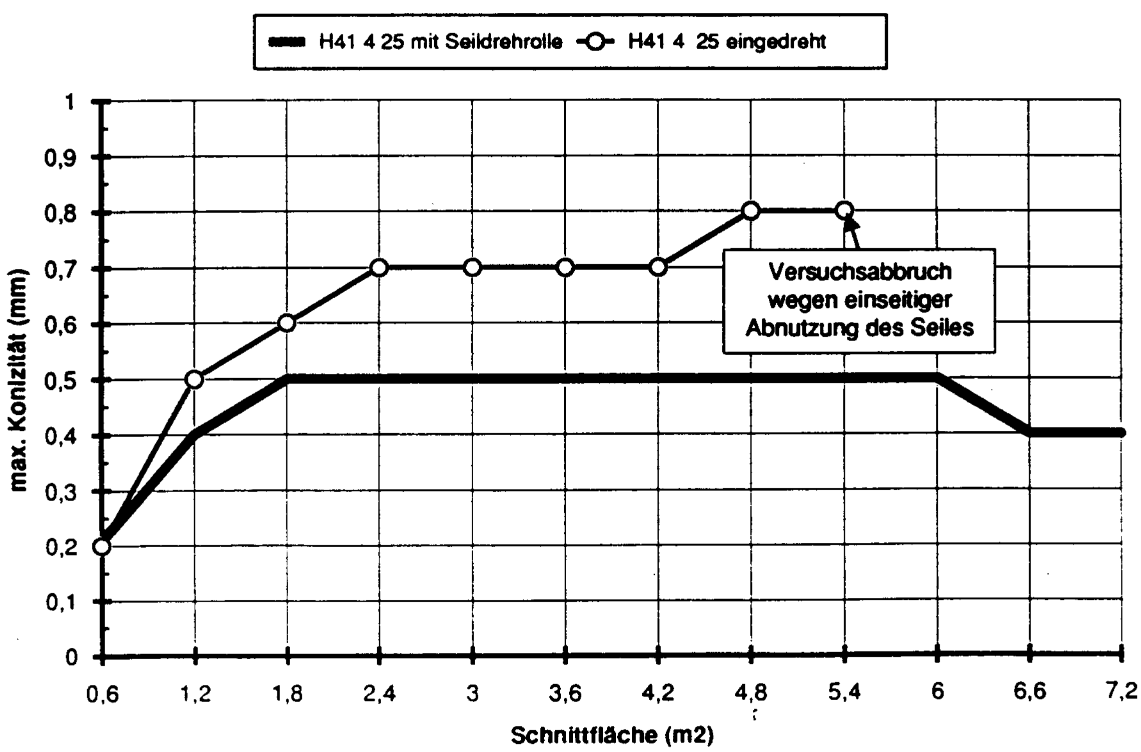
H41 4 25 mit Seildrehrolle
H41 4 25 eingedreht
Versuchsabbruch wegen einseitiger Abnutzung des Seiles
max. Konizität (mm)
1
0,9
0,8
0,7
0,6
0,5
0,4
0,3
0,2
0,1
0
0,6
1,2
1,8
2,4
3
3,6
4,2
4,8
5,4
6
6,6
7,2
Schnittfläche (m2)